# EUROPEAN PATENT APPLICATION

(11) **EP 1 659 078 A1**
(43) Date of publication of application: **24.05.2006**
(21) Application number: 05019513.0
(22) Date of filing: 08.09.2005
(51) Int. Cl.: B65G 47/66, B65G 13/00

(54) **Transfer table for conveyors**

(30) Priority: 22.11.2004 IT MI20042258
(71) Applicant: System Plast S.p.A., 24060 Telgate (Bergamo) (IT)
(72) Inventor: Marsetti, Sergio, 24060 Castelli Calepio (Bergamo) (IT)
(74) Representative: Kratter, Carlo

(57) **Abstract**

A transfer table for conveyors, comprising a casing (1) presenting support and retaining means (2, 3) for a plurality of slider elements (5) in the form of idle rollers forming a sliding surface, said table being arranged to receive on said sliding surface the products originating from a transport surface of an endless conveyor, said two surfaces being substantially coplanar and mutually aligned to enable the products to pass from one end of the conveyor onto said table, in which the slider elements (5) each present: a shaft (4) supporting, free to rotate idly, an elongate roller (9) which extends along the entire width (L) of said sliding surface, and means (10) cooperating with the ends of each of said elongate rollers (9) and shafts (4) to enable idle rotary movement of said rollers about their respective shaft, said shafts (4) being all mutually parallel.

## Description

The present invention relates to a transfer table for conveyors in accordance with the pre-characterising part of the main claim.

Transfer tables of the aforestated type have been known for some time, however all present numerous drawbacks. A first problem of known tables is related to the fact that they generally use on each shaft a plurality of plastic idle rollers simply drawn over the shaft, so that it often happens that dirt accumulates between one roller and another and/or on the roller sliding surfaces, which with time clogs the rollers so that they become blocked, to consequently drastically limit the table transfer capacity.

Another drawback of known tables is related to the fact that when they are to be coupled to a conveyor of considerable width the roller shafts have to be supported not only at their ends but also in central positions; for this purpose the table has to comprise central support ribs which reduce the sliding surface and which, if the products from the conveyor arrive on the table not perfectly centred, can cause blockage or displacement of the products on the transfer table.

A further drawback of known tables is related to the fact that their height adjustment is relatively slow and complicated.

An object of the present invention is to provide a table which overcomes the aforestated drawbacks and in particular is able to prevent the sliding surface from not dragging or not properly dragging the products originating from the conveyor, and which is easily height-adjustable.

These and further objects are attained by a table in accordance with the characterising part of the accompanying claims.

The present invention will be more apparent from the accompanying drawing, which is provided by non-limiting example and in which:
Figure 1 is a perspective view of a transfer table of the invention,
Figure 2 is a section through a slider element,
Figure 3 is an enlarged view of a detail of a variant of a slider element,
Figure 4 is a view of a variant of a table of the invention seen from above,
Figure 5 is a view of a further variant seen from below,
Figure 6 shows a conventional system for connecting a table to a fixed support (not shown) of a conveyor,
Figure 7 is a schematic section through a device for height-adjusting a transfer table,

Figures 8A, B, C are a respectively a schematic top, side and front view of a variant of the embodiment of Figures 1-3.

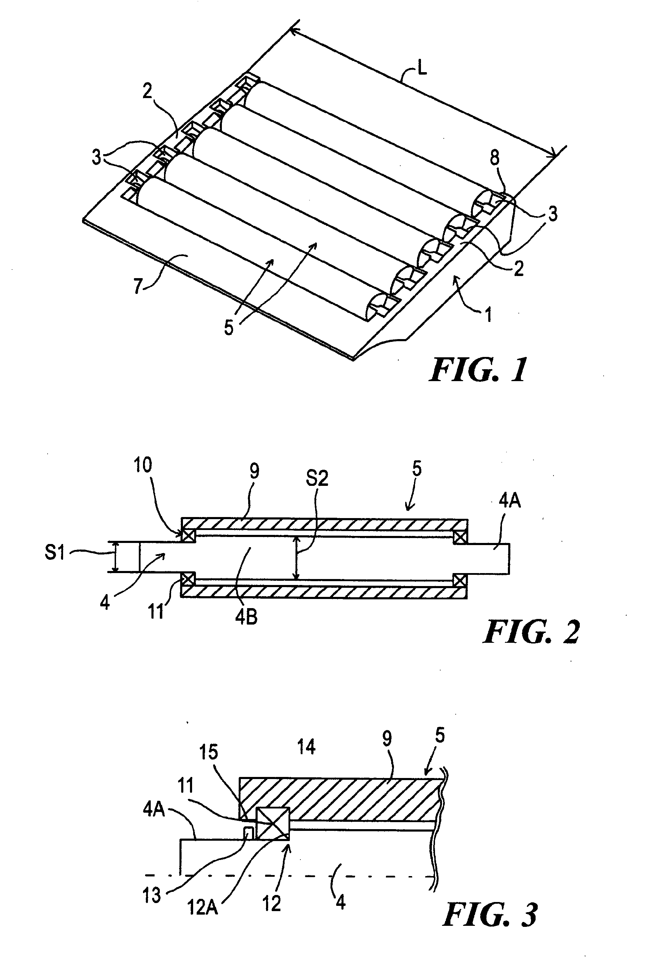

With reference to Figures 1-3 these show a transfer table comprising an upperly open box casing 1 presenting parallel side walls 2 comprising usual upperly open seats shaped to support and snap-restrain the ends 4A of shafts 4 of slider elements 5 arranged to form a sliding surface, said table being arranged to receive on said sliding surface the products originating from a transport surface of an endless conveyor (not shown) preferably of belt or chain type, said transfer surface being aligned and coplanar with an end portion of the transport surface.

The box casing 1 presents a hollow seat for partly housing the slider elements 5 and defined by the side walls 2, by a base wall 6, by a front wall 7 and possibly by a rear wall 8.

It should be noted that according to the invention, whatever the table width L, the casing 1 does not comprise intermediate shoulders for supporting and/or retaining the shaft 4 in positions other than the end positions, hence the table presents only rotary sliding surfaces throughout its width L, thus ensuring optimal product transport.

In addition to the shaft 4, the slider elements present a single elongate roller 9 and means 10 enabling the roller to rotate idly about said shaft, said means advantageously being two ball bearings 11 provided at the ends of said shaft and roller.

To house each bearing 11 the shaft comprises seats 12 at its ends; the seats are preferably formed by means of a step 12A obtained by profiling the shaft so that its thickness S1 at its end portions 4A is less than the thickness S2 of the remaining shaft portion 4B. The thickness S1 is for example 2/3 of the thickness S2. The bearing 11 is of conventional type, preferably a ball bearing, and is fitted to the shaft 4 and to the ends of the inner wall of the elongate roller 9 by a forced fit. To improve the bearing connection it can comprise a securing member of usual type, for example a snap ring associated with the ends 4A of the shaft 4. The elongate roller 9 comprises at its ends a seat 14 for the bearing 11 formed by an annular recess; the most outer edge of said seat and said elongate roller presents a bevelled wall 15 to facilitate snap insertion of the bearing into said recessed annular seat 14.

The elongate rollers 9 are of hollow cylindrical shape and can be formed of plastic or metal, preferably steel.

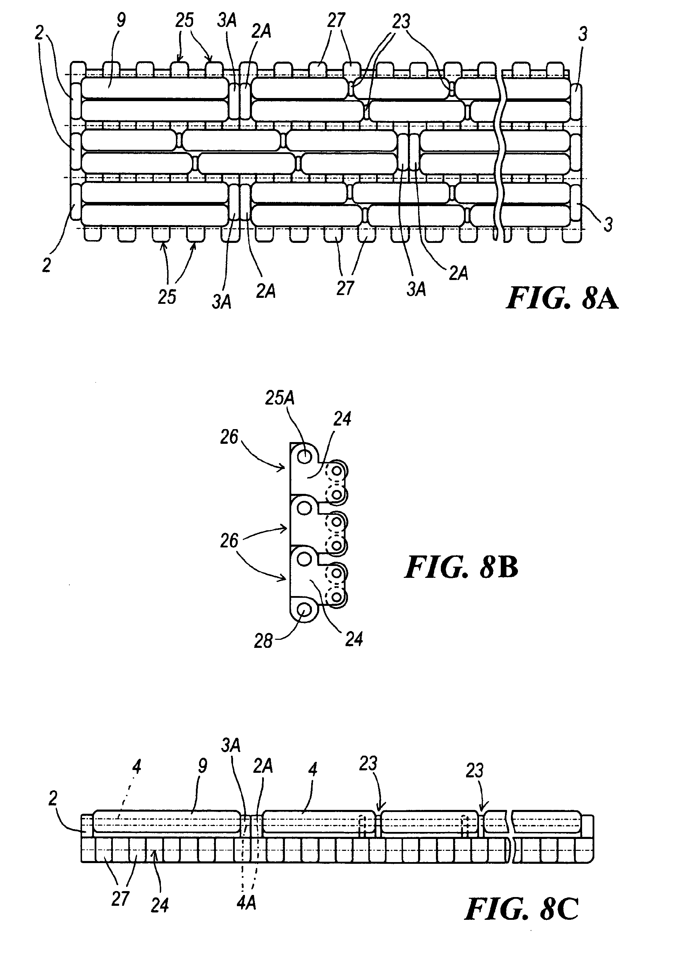

Up to this point an embodiment of a transfer table has been described in which the rollers 9 extend throughout the entire width L of the table sliding surface. The invention can however also be used in known transfer tables in which to increase the sliding surface width each parallel row of roller slider elements is not formed from a single roller, as aforedescribed, but is formed from a plurality (generally two or three) of coaxial rollers. This variant is shown in Figures 8A-C in which the table comprises intermediate support and retaining means 2A, 3A in addition to the aforedescribed lateral means 2, 3.

As in the case of the lateral means, said intermediate support means comprise an intermediate wall 2A parallel to the side wall 2, comprising seats arranged to support and restrain by snap-fitting or in other known manner the ends 4A of the shafts 4 of the rollers 9 of the roller slider elements.

Advantageously, for roller slider elements of greater length the table also comprises bridges 23 for supporting the shafts of said elements within intermediate portions provided between the ends of the elements.

As in the case of the previously described embodiment, the slider elements comprise a shaft 4, an elongate roller 9 and means (not shown in Figures 8) to enable the roller to rotate idly about said shaft, said means advantageously being two ball bearings provided at the ends of said roller shaft as described for the previously described embodiment.

The transfer table can also be of modular form as shown in Figures 8 rather than box-like as previously described. In this variant the transfer table comprises a plurality of modules 26 in which the support and retaining means 2, 3, 2A, 3A extend from a preferably flat base member 24 presenting conventional means 25 and counter-means 25A to enable the modules to be removably connected together. Said connection means and counter-means comprise for example eyelets 27 extending from the base member and disposed such that the eyelets of adjacent modules fit comb-like together and can be penetrated by a shaft 28 connecting the modules together. In this further variant the transfer table can be shaped as a true transfer band of length variable at will, the term "transfer table" in the present context therefore also meaning a modular transfer band.

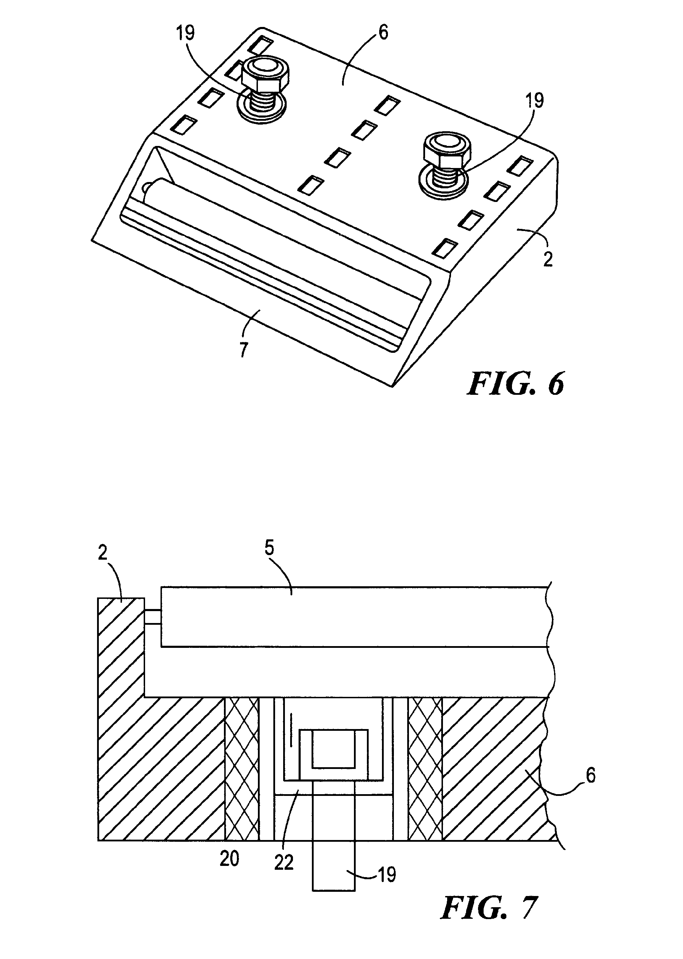

To connect the table of Figures 1-3 to the conventional supports of the conveyor device the base wall of the table can comprise usual through holes for the passage of a screw 19 (Figure 6) to fix the table, in a manner conventional to the expert of the art, to a conventional fixed support structure of the conveyor.

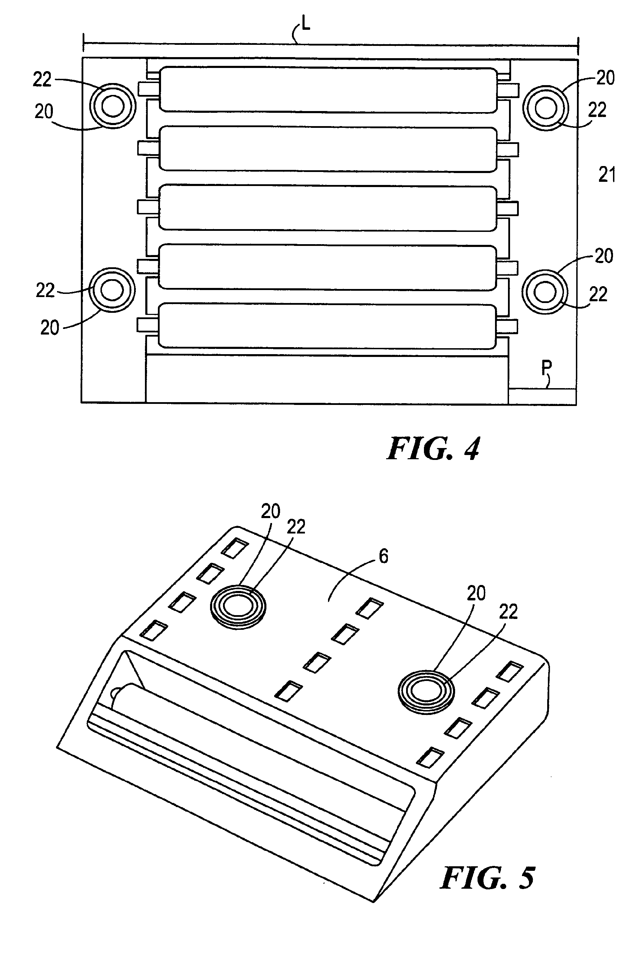

Advantageously the table comprises means for height-adjusting the sliding surface of the table relative to the end of a transport surface of an endless conveyor with which said sliding surface must be aligned and coplanar. Said height adjustment device for the table comprises one or more threaded holes 20 (Figures 4, 5) having their axis of symmetry perpendicular to the axis of rotation of the slider elements 5 and provided either in the side walls 21 of the box casing 1 (Figure 4), which in that case will have a width P greater than that of the side walls 2 of tables without said device, or in the base wall of the box casing 1 (Figure 5). In each of the threaded holes 20 there engages a bush 22 bored centrally to enable a screw identical to the screw 19 of Figure 6 or a socket head screw (as shown in Figure 7) to pass. In its upper edge the bush comprises notches to enable the bush to be rotated with the aid of a member of screwdriver type able to engage said notches. By rotating the bush 22 the position of the screw 19 is moved, with consequent adjustment of the table height relative to the fixed structure to which it is secured. It should be noted that the table height adjustment devices can also advantageously be provided in conventional transfer tables, or in tables presenting sliding surfaces different from the aforedescribed, and that the aforedescribed bush system can be replaced by other known positioning systems utilizing one or more upperly open threaded holes provided in the table body.

If the threaded holes 20 are provided in the base wall 6 the table height adjustment must take place before positioning the slider elements 5.

## Claims

1. A transfer table for conveyors, comprising a casing (1) presenting support and retaining means (2, 3) for a plurality of slider elements (5) in the form of idle rollers forming a sliding surface, said table being arranged to receive on said sliding surface the products originating from a transport surface of an endless conveyor, said two surfaces being substantially coplanar and mutually aligned to enable the products to pass from one end of the conveyor onto said table, **characterised in that** the slider elements (5) each present: a shaft (4) supporting, free to rotate idly, an elongate roller (9) which extends along the entire width (L) of said sliding surface, and means (10) cooperating with the ends of each of said elongate rollers (9) and shafts (4) to enable idle rotary movement of said rollers about their respective shaft, said shafts (4) being all mutually parallel.

2. A table as claimed in claim 1, **characterised in that** the means (10) enabling idle rotation comprise bearings (11).

3. A table as claimed in claim 2, **characterised in that** the bearings (11) are ball bearings.

4. A table as claimed in claim 1, **characterised in that** the support and retaining means (2, 3) cooperate only and exclusively with end portions (4A) of the shafts (4).

5. A table as claimed in claim 1, **characterised in that** the shafts (4) present a seat (12) for housing the movement means (10).

6. A table as claimed in claim 5, **characterised in that** the seats (12) are formed by a step (12A) provided in the end portions of the shafts (4).

7. A table as claimed in claim 1, **characterised in that** the shafts (4) present end portions (4A) having a thickness (S1) smaller than the thickness (S2) of the remaining portion (4B) of the shafts (4).

8. A table as claimed in claim 2, **characterised by** comprising a member (13) for securing the bearing to the shaft (4).

9. A table as claimed in claim 2, **characterised in that** at their ends the elongate rollers (9) comprise for the bearing (11) a seat (14) formed by an annular recess.

10. A table as claimed in claim 9, **characterised in that** the most outer edge of the seat (14) provided in the rollers (9) for the bearings (11) presents a bevelled wall (15) to facilitate the snap insertion of the bearing into said recessed annular seat (14).

11. A table as claimed in claim 1, **characterised in that** the box casing (1) presents, for partly housing the slider elements (5), a hollow seat defined by side walls (2), by a base wall (6) and by a front wall (7) lowerly shaped as an arched bridge.

12. A table as claimed in claim 1, **characterised by** comprising means (20, 22) for adjusting the height of said table relative to a fixed support structure of the conveyor, and for enabling the sliding surface of the table and the transport surface of the conveyor to be positioned substantially mutually coplanar.

13. A table as claimed in claim 12, **characterised in that** the means for adjusting the height of said table comprise at least one threaded through hole (20) provided in one of the walls of the box casing and having its axis of symmetry perpendicular to the axis of rotation of the slider elements (5).

14. A table as claimed in claim 13, **characterised in that** the through hole (20) opens into the open upper face of the box casing, so that it can be reached from above.

15. A table as claimed in claim 13, **characterised in that** the upper opening of the through hole (20) is closed by a removable plug.

16. A table as claimed in claim 13, **characterised in that** the through hole (20) is engaged by a bush (22) which is bored centrally to enable a fixing member (24) to pass.

17. A table as claimed in claim 16, **characterised in that** the bush (22) presents, in its upper edge, elements enabling it to be rotated within the threaded hole (20).

18. A transfer table for conveyors, comprising a casing (1) presenting support and retention means (2, 3, 2A, 3A) for a plurality of slider elements (5) in the form of idle rollers forming a sliding surface, said table being arranged to receive on said sliding surface the products originating from a transport surface of an endless conveyor, said two surfaces being substantially coplanar and mutually aligned to enable the products to pass from one end of the conveyor onto said table, **characterised in that** the slider elements (5) each present: a shaft (4) supporting, free to rotate idly, an elongate roller (9), and means (10) cooperating with the ends of each of said elongate rollers (9) and shafts (4) to enable and facilitate idle rotary movement of said rollers about their respective shaft.

19. A table as claimed in claim 18, **characterised in that** each slider element comprises a plurality of shafts (4) and mutually coaxial elongate rollers (9), the support and retention means (2, 3, 2A, 3A) being provided both in the sides of the casing (1) and in positions intermediate between said sides.

20. A table as claimed in claim 18, **characterised in that** the casing (1) comprises a plurality of modular parts (26) which can be fitted together, and means (27, 28) for removably connecting said parts together.

21. A table as claimed in claim 18, **characterised in that** the means (10) enabling idle rotary movement comprise bearings (11).

22. A table as claimed in claim 21 **characterised in that** the bearings (11) are ball bearings.

23. A table as claimed in claim 18, **characterised in that** the shafts (4) present a seat (12) for housing the movement means (10).

24. A table as claimed in claim 23, **characterised in that** the seats (12) are formed by a step (12A) provided in the end portions of the shafts (4).

25. A table as claimed in claim 18, **characterised in that** the shafts (4) present end portions (4A) having a thickness (S1) smaller than the thickness (S2) of the remaining portion (4B) of the shafts (4).

26. A table as claimed in claim 18, **characterised by** comprising a member (13) for securing the bearing to the shaft (4).

27. A table as claimed in claim 18, **characterised in that** at their ends the elongate rollers (9) comprise for the bearing (11) a seat (14) formed by an annular recess.

28. A table as claimed in claim 27, **characterised in that** the most outer edge of the seat (14) provided in the rollers (9) for the bearings (11) presents a bevelled wall (15) to facilitate the snap insertion of the bearing into said recessed annular seat (14).
